# EUROPÄISCHE PATENTSCHRIFT

(11) **EP 1 097 774 B1**
(45) Veröffentlichungstag und Bekanntmachung des Hinweises auf die Patenterteilung: **14.07.2004**
(21) Anmeldenummer: 99121856.1
(22) Anmeldetag: 04.11.1999
(51) Int. Cl.: B23H 7/30, B23H 7/26, B23H 3/00

(54) **Einrichtung zur elektro-chemischen Bearbeitung von Metallen**
Apparatus for electrochemically machining metals
Installation pour l'usinage par électrochimie de métaux

(43) Veröffentlichungstag der Anmeldung: 09.05.2001
(73) Patentinhaber: ECM GbR, Harder, Nase, Semashko, Wacht, Wacht, 66763 Dillingen/Saar (DE)
(72) Erfinder: Harder, Gerhard, 66763 Dillingen/Saar (DE); Nase, Rainer, 66280 Sulzbach (DE)
(74) Vertreter: Troesch Scheidegger Werner AG

(56) Entgegenhaltungen:
- DE-A- 2 903 873
- FR-A- 1 148 926
- FR-A- 2 577 156
- US-A- 4 430 544
- LÜDERS: "Probleme bei der Vorschubregelung von Funkenerosionsmaschinen" TECHN. MITT. KRUPP WERKSBERICHTE, Bd. 33, Nr. 1, 1975, Seiten 7-21, XP002137129

## Beschreibung

Die vorliegende Anmeldung betrifft eine Einrichtung zur elektro-chemischen Bearbeitung von Metallen (ECM) nach dem Oberbegriff von Anspruch 1.

Es sind eine Reihe von Verfahren und Einrichtungen zur elektro-chemischen Bearbeitung von Metallen mittels einer vibrierenden Elektrode bekannt, wie beispielsweise aus der DE 29 03 873. Dabei wird ein Werkstück in einem Elektrolyten mittels eines Werkzeuges, welches mit Hilfe eines Motors in schwingende Bewegung über dem Werkstück versetzt wird, und zum Zeitpunkt des geringsten Abstandes zwischen Werkstück und Werkzeug mit einem Spannungsimpuls beaufschlagt wird, bearbeitet. Die Uebertragung der Drehbewegung des Motors auf das Werkzeug resp. die Werkzeughalterung erfolgt herkömmlicherweise über eine mit der Motorachse gekuppelte Kurbelwelle und Pleuel.

Das Problem bei den vorgenannten bekannten Einrichtungen, wie auch Einrichtungen mit sehr engem Arbeitsspalt, liegt nun darin, die Werkzeughalterung möglichst ohne seitliches Spiel längsverschiebbar zu lagern, um das Werkzeug in einer exakten, definierten Position schwingend zu bewegen. Die herkömmlichen Lagerungen über Führungsschienen genügen diesem Kriterium nur teilweise, da das seitliche Spiel nie vollständig zu eliminieren ist.

Weiter sind Techniken zur elektrophysikalischen Metallbearbeitung (Funkenerosion bzw. EDM) bekannt, bei denen ebenfalls "vibrierende" Elektroden zum Einsatz kommen. Die beiden Techniken (ECM bzw. EDM) haben wenig Gemeinsamkeiten, sind also gattungsfremd, und stellen an die Maschinentechnik wesentlich unterschiedliche Anforderungen. Bei der EDM dienen die langsamen Vibrationen der Spülung des Spaltes, siehe z.B. US-PS 4 430 544 und FR-PS 2 577 156, sowie Aufsatz von Lüders (Krupp Werksberichte, Bd. 33, Nr. 1, 1975), während den schnelleren Vibrationen bei der ECM die Aufgabe zufällt, den minimalen Spalt zu öffnen um den Elektrolyten austauschen zu können.

Bei der Lösung dieser Aufgabe, die sich nur bei der ECM stellt, konnte der Fachmann nicht auf den maschinellen Aufbau bei der EDM zurückgreifen und auch nicht voraussehen, dass gegebenenfalls bekannte konstruktive Teillösungen auf die ECM übertragbar sein könnten, umso mehr als solche vorbekannten Lösungen immer eine Elektrodenführung aufweisen, welche auch unbedingt zu vermeidende seitliche Bewegungen zulässt.

Die sich aus der weiter den angeführten allgemeinen Aufgabe der vorliegenden Erfindung ergebende spezielle Aufgabe lag nun darin, eine Lagerung für die beiden Bauteile, insbesondere für die Werkzeughalterung resp. das Werkzeug zu finden, welche quer zur Bewegungsrichtung praktisch kein Spiel aufweist.

Diese Aufgabe wird erfindungsgemäss durch eine Einrichtung mit den Merkmalen nach dem kennzeichnenden Teil von Anspruch 1 gelöst. Weitere bevorzugte Ausführungsformen ergeben sich aus den Merkmalen der weiteren Ansprüche 2 bis 4.

Dadurch, dass bei einer Ausführungsform die Werkzeugaufnahme mittels Membranen in der Pinole geführt ist, wird leditlich eine vertikale Bewegung der Werkzeugaufnahme ermöglicht, dabei aber praktisch jegliches horizontale Spiel vermieden. Diese Eigenschaft wird auch durch den Betrieb nicht verändert, wogegen herkömmliche Lagerungen mit zunehmender Betriebsdauer ein zunehmendes Spiel aufweisen.

Durch die erfindungsgemässe Einrichtung wird eine präzise elektro-chemische Bearbeitung von Werkstücken auch über eine längere Betriebsdauer gewährleistet. Überdies ist der erfindungsgemässe Aufbau sehr einfach wartbar.

Ein Ausführungsbeispiel der vorliegenden Erfindung wird nachstehend anhand von Figuren noch näher erläutert. Es zeigen
Fig. 1 den Längsschnitt durch eine erfindungsgemässe Einrichtung; und
Fig. 2 den Querschnitt im Bereich des Pleuels der Einrichtung nach Figur 1.

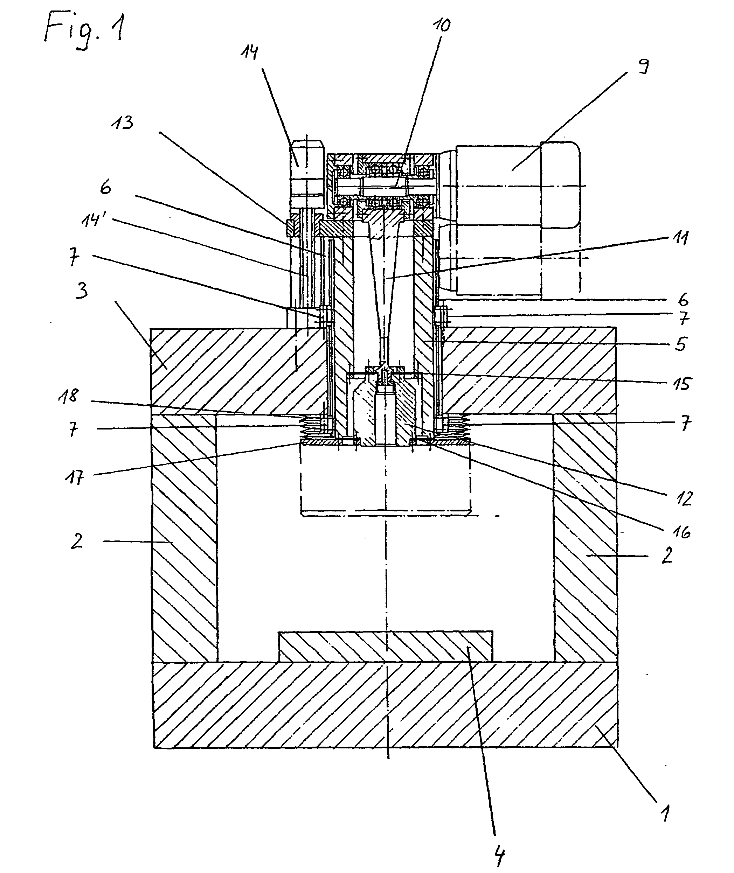

Die erfindungsgemässe Einrichtung weist ein aus einem Sokkel 1, Seitenwangen 2 und darüber aufgesetztem Maschinenportal 3 bestehendes Gehäuse auf, wie aus Figur 1 ersichtlich ist. Im Innern des Gehäuses ist auf dem Sockel 1 ein Bearbeitungstisch 4 ausgebildet, auf welchem das zu bearbeitende Werkstück (hier nicht dargestellt) aufgesetzt wird. Die Gehäuseteile bestehen vorzugsweise aus einem nicht-metallischen Material wie beispielsweise aus Granit.

Auf dem Maschinenportal 3 ist eine Pinole 5 mit seitlich angebrachten Linearführungen 6, welche in auf der Ober- und Unterseite des Maschinenportals 3 angeordneten Führungsschlitten 7 geführt sind, angeordnet. Die Pinole 5 ragt durch eine Ausnehmung 8 im Maschinenportal 3 in das Innere des Gehäuses hinein. An der Oberseite der Pinole 5 ist der Exzenterantrieb 9 angeflanscht, dessen Kurbelwelle 10 seitlich in die Pinole 5 hineinragt. An der Kurbelwelle 10 ist eine Pleuelstange 11 angeordnet, welche mit einer von der Unterseite der Pinole 5 abragenden Werkzeugaufnahme 12 verbunden ist.

Im oberen Bereich der Pinole 5 ist weiter eine Konsole 13 angebracht, welche mit einem Vorschubantrieb 14 verbunden ist, der seinerseits über eine mit dem Maschinenportal 3 verbundene Spindel 14' die Pinole 5 vertikal verschiebar antreibt.

Die Werkzeugaufnahme 12 ist mittels zweier Membranen 15 und 16 jeweils an der oberen und unteren Seite mit der Pinole 5 verbunden. Diese Lagerung erlaubt eine vertikale Relativbewegung der Werkzeugaufnahme 12 in Bezug auf die Pinole 5, wobei keine Bewegungen horizontal in Bezug auf die Pinole 5 möglich sind und somit eine in dieser Ebene spielfreie Lagerung realisiert wird.

Die Pleuelstange 11 ist vorzugsweise konisch mit von oben nach unten abnehmendem Querschnitt ausgebildet und erlaubt im untersten Bereich vor der Verbindungsstelle mit der Werkzeugaufnahme 12 eine elastische Verformung. Damit kann an dieser Stelle auf eine Lagerung der Pleuelstange 11 verzichtet werden, da ohnehin für die elektro-chemische Bearbeitung nur sehr geringe Exzenterhübe von ca. 0,1 bis 0,5 mm ausgeführt werden.

Die Unterseite der Pinole 5 ist mit einem Flansch 17 und Faltenbalg 18 gegen den Innenraum des Gehäuses abgedichtet, um zu verhindern, dass Elektrolytdämpfe oder Elektrolytspritzer in das Innere der Pinole 5 eindringen können. Die Membranen 15 und 16 dienen hierbei als weitere Dichtelemente zwischen der Werkzeugaufnahme 12 und dem Innern der Pinole 5.

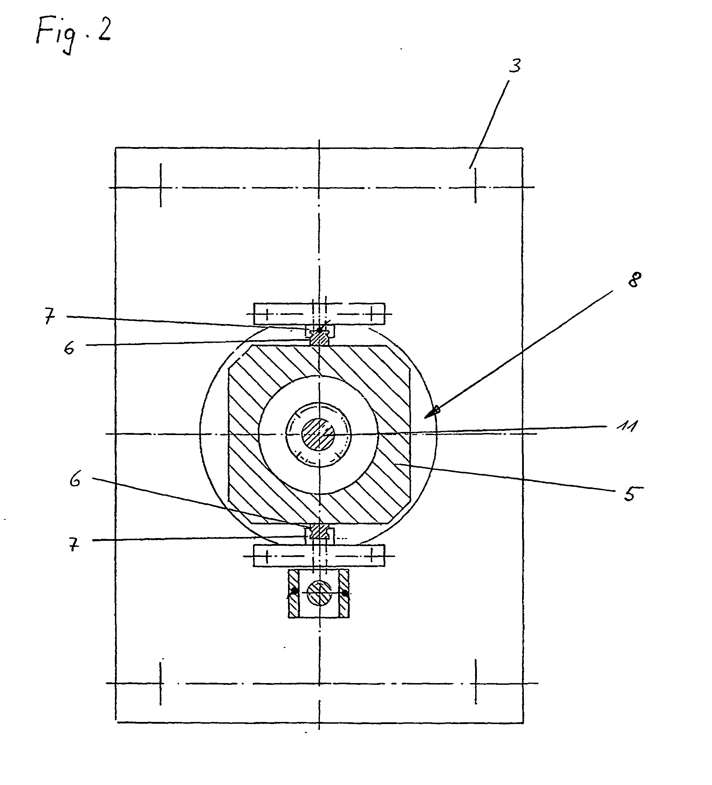

Die Pinole 5 weist vorzugsweise einen quadratischen Querschnitt mit abgekanteten Ecken auf, wie dies aus dem in Figur 2 dargestellten Querschnitt hervorgeht. Der Innenraum der Pinole 5 ist dagegen vorzugsweise rund ausgebildet.

Der Aufbau der Pinole 5, des Exzenterantriebes 9 und des Vorschubantriebes 14 erlaubt einerseits eine gute Justierung der Einrichtung beim Zusammenbau und erlaubt andererseits eine einfachen Austausch oder Wechsel der Teile der Maschine.

Der Vibrator erlaubt die extrem exakte Verstellung zweier Flächen zueinander. Der elektro-chemische Bearbeitungsprozess von Metallen (anodische Auflösung) erlaubt die Abformung von Geometrien in der Grössenordnung des Abstandes von Werkstück und Werkzeug. Daher ist eine Annäherung auf wenige µm erwünscht.

Der Stromfluss im Spalt wird durch Ionen im Elektrolyten bewirkt. An der Anode gehen dabei Metallatome in Lösung und fallen dann als Hydroxide aus. Der Elektrolyt ändert dabei seinen Zustand und muss ausgetauscht werden. Dazu wird der Spalt geöffnet.

Der sich öffnende und schliessende Spalt kann z.B. auch als Pumpe eingesetzt werden, wenn er mit Zylinderwänden und Ein-/Auslassventilen versehen wird.

## Patentansprüche

1. Einrichtung zur elektro-chemischen Bearbeitung von Metallen, mit zwei in einem Maschinengehäuse (1, 2, 3) entlang einer definierten Bahn, insbesondere entlang einer geradlinigen Achse, relativ zueinander geführten und verfahrbaren, Elektroden bildenden Bauteilen, zwischen deren oder ggf. von darauf aufgesetzten Zusatzteilen sich gegenüberliegenden Flächen ein enger Arbeitsspalt einstellbar ist, wobei Mittel (9, 10, 11) vorgesehen sind, um zumindest einem eine solche Begrenzungsfläche aufweisenden Bestandteil einer der beiden Elektroden unabhängig vom Zustellantrieb eine periodische wegbegrenzte Schwingbewegung aufzuerlegen, um dadurch den jeweils eingestellten Arbeitsspalt periodisch zu verändern, **dadurch gekennzeichnet, dass** der wegbegrenzt periodisch schwingend angetriebene, die eine Begrenzungsfläche des Spaltes aufweisende Bestandteil der einen Elektrode (12) so geführt ist, dass diese Bewegung nur in Richtung der definierten Bahn erfolgt und der periodische Antrieb auf den genannten Bestandteil (12) wirkt, wobei die wegbegrenzte schwingend periodische Bewegung der genannten einen Elektrode (12) durch elastische Verformung von zwei die Elektrode gegenüber dem Gehäuse (1, 2, 3) in Richtung der genannten definierten Bahn haltenden, in einer senkrechten Ebene zur Bahn im Abstand voneinander angeordneten Membranen (15, 16) erfolgt, welche ausschliesslich in Richtung der genannten Bahn verformbar sind, und wobei der Schwingungsantrieb auf die Elektrode (12) wirkt.

2. Einrichtung nach Anspruch 1, **dadurch gekennzeichnet, dass** zur Übertragung der periodischen Bewegung ein Hebelsystem vorgesehen ist.

3. Einrichtung nach Anspruch 2, **dadurch gekennzeichnet, dass** das Hebelsystem mit Festkörpergelenken ausgerüstet ist.

4. Einrichtung nach einem der Ansprüche 1 bis 3, **dadurch gekennzeichnet, dass** der Zustellantrieb zwischen den beiden Bauteilen bzw. den beiden Elektroden ein Schreitantrieb ist.

## Claims

1. Apparatus for electrochemically working metals having a pair of structural members forming electrodes which are arranged in a machine housing (1, 2, 3) and guided for being displaceable relative to each other along a defined path, particularly along a linear axis, said structural members or optionally auxiliary members mounted thereon having opposed surfaces provided for the formation of a narrow working gap of adjustable width between them, whereby means (9, 10, 11) are provided for imposing a limited periodic vibratory movement independently of the feeding movement on at least one component of one of said pairs of electrodes presenting such a limiting surface in order to thereby periodically vary the width of said adjusted working gap, **characterized in that** said component of said one electrode (12) of said pair of electrodes presenting one limiting surface of the gap and driven with a periodic vibratory movement is guided in such a manner that this movement takes place only in the direction of said defined path and **in that** the periodic drive acts onto said component (12), whereby the limited periodic vibratory movement of said one electrode (12) takes place by elastic deformation of two mutually spaced membranes (15, 16) arranged in planes perpendicular to said path and guiding said pair of electrodes with respect to the machine housing (1, 2, 3) in the direction of said defined path, said membranes being deformable exclusively in direction of said path and whereby said vibratory drive acts onto the electrode (12).

2. Apparatus as claimed in claim 1, **characterized by** a lever system for the transmission of said periodic movement.

3. Apparatus as claimed in claim 2, **characterized in that** said lever system is equipped with solid body articulations.

4. Apparatus as claimed in any of claims 1 to 3, **characterized in that** the feeding movement drive between the two structural members respectively the two electrodes is a stepping drive.

## Revendications

1. Installation pour l'usinage par électrochimie de métaux, présentant une paire d'éléments de construction formant des électrodes disposés dans un boîtier (1, 2, 3) et guidés pour être déplaçable l'un par rapport à l'autre le long d'une trajectoire définie, notamment le long d'un axe linéaire, lesdits éléments de construction ou,le cas échéant des éléments auxiliaires montés sur ces éléments de construction présentant des surfaces opposées destinées à la formation d'un gap de travail mince entre eux ajustable, ainsi que des moyens (9, 10, 11) pour imposer un mouvement périodique oscillant limité en course indépendant du mouvement d'avance à au moins une composante de l'une des deux électrodes présentant une telle surface de délimitation, pour ainsi périodiquement varier la largeur dudit gap de travail ajusté, **caractérisée en ce que** ladite composante de ladite une électrode (12) présentant une des surfaces de délimitation du gap et entraînée d'un mouvement périodique oscillant est guidée de telle manière que ce mouvement ne se déroule que dans la direction de ladite trajectoire définie et **en ce que** l'entraînement périodique agit sur ladite composante (12), ledit mouvement périodique oscillant limité de ladite une électrode (12) se faisant par déformation élastique de deux membranes (15, 16) espacées disposées dans des plans perpendiculaires à ladite trajectoire et guidant ladite paire d'électrodes par rapport audit boîtier (1, 2, 3) en direction de la trajectoire définie, les membranes étant déformable exclusivement en direction de la trajectoire et l'entraînement oscillant agissant sur l'électrode (12).

2. Installation selon la revendication 1, **caractérisée par** un système de leviers pour la transmission du mouvement périodique.

3. Installation selon la revendication 2, **caractérisée en ce que** ledit système de leviers est équipé d'articulations du type corps solide.

4. Installation selon l'une des revendications 1 à 3, **caractérisée en ce que** l'entraînement du mouvement d'avance entre les deux éléments de construction respectivement entre les deux électrodes est un entraînement pas à pas.
